# FASCICULE DE BREVET EUROPEEN

(11) **EP 1 437 259 B1**
(45) Date de publication et mention de la délivrance du brevet: **25.10.2006**
(21) Numéro de dépôt: 03292992.9
(22) Date de dépôt: 01.12.2003
(51) Int. Cl.: B60Q 1/115, B60Q 1/08

(54) **Système de commande de l'orientation en site d'un projecteur de véhicule et procédé de mise en oeuvre**
Vorrichtung und Verfahren zur Einstellung der Neigung eines Fahrzeugscheinwerfers
Elevation adjustment device for vehicle headlamp and the method thereof

(30) Priorité: 09.12.2002 FR 0215874
(43) Date de publication de la demande: 14.07.2004
(73) Titulaire: VALEO VISION, 93012 Bobigny Cédex (FR)
(72) Inventeur: BRUN, Norbert, 93012 Bobigny Cedex (FR); LELEVE, Joel, 93012 Bobigny Cedex (FR)

(56) Documents cités:
- EP-A- 1 201 498
- DE-A- 19 602 005
- US-A- 5 359 666
- US-A- 6 144 159

## Description

### Domaine de l'invention

L'invention concerne un système pour commander l'orientation en site d'un projecteur de véhicule assurant un éclairage constant de la route, quelle que soit l'assiette du véhicule. L'invention concerne également un procédé permettant de mettre en oeuvre ce système de commande.

L'invention trouve des applications dans le domaine des véhicules circulant sur routes comme, par exemple, les véhicules automobiles ou les véhicules poids lourds. Elle trouve, en particulier, des applications dans le domaine de la projection de lumière par ces véhicules sur la route.

### Etat de la technique

Actuellement, tous les véhicules roulant sur la route comportent un dispositif d'éclairage de la route utilisé particulièrement la nuit ou lors d'intempéries. Classiquement, il existe sur les véhicules automobiles deux types d'éclairages : un éclairage dit «de route » qui éclaire la route intégralement sur une longue distance et un éclairage dit «de croisement » qui éclaire la route sur une courte distance pour éviter d'éblouir les conducteurs des véhicules susceptibles de venir en sens inverse. L'éclairage de route est réalisé au moyen de projecteurs de route qui envoient chacun un faisceau lumineux dirigé vers l'horizon. L'éclairage de croisement est réalisé au moyen de projecteurs de croisement, appelés aussi codes, qui envoient chacun une nappe de lumière descendante donnant une visibilité sur une distance de l'ordre de 60 à 80 mètres.

Dans le cas de l'éclairage de croisement, la portée de l'éclairage est ajustée en orientant les projecteurs dans le plan vertical. Classiquement, l'orientation du faisceau lumineux émis par les projecteurs de croisement est réglée par des spécialistes, en particulier des mécaniciens automobiles, en fonction d'une indication donnée par le constructeur du dispositif d'éclairage. L'angle d'orientation du faisceau lumineux est donné par le constructeur en pourcent de radiant. Cet angle d'orientation des faisceaux lumineux est donné pour un véhicule dans une position standard. On appelle «position standard » du véhicule, la position dans laquelle le châssis du véhicule est sensiblement parallèle à la route, c'est-à-dire que l'angle que forme le châssis du véhicule avec le plan horizontal est plat. On dit alors que l'assiette du véhicule est plate.

Cependant, on sait que l'assiette du véhicule peut être modifiée en fonction de la situation dans laquelle se trouve le véhicule (accélération, freinage, etc.) et en fonction de la charge du véhicule. En effet, lorsque le véhicule est très chargé, alors l'arrière du véhicule est abaissé, ce qui implique que l'avant du véhicule est relevé. Le véhicule n'est donc plus parallèle à la route. On dit familièrement qu'il «lève le nez ». Dans ce cas, les faisceaux lumineux des projecteurs de croisement du véhicule sont dirigés vers l'horizon, au lieu d'être dirigés vers la route. Ils peuvent alors éblouir les conducteurs de véhicules venant en sens inverse.

Au contraire, lorsque le véhicule est en train de freiner, alors l'avant du véhicule bascule vers la route. Le véhicule n'est donc plus parallèle à la route. On dit familièrement qu'il «pique du nez ». Dans ce cas, les faisceaux lumineux des projecteurs de croisement éclairent la route juste devant le véhicule. Le conducteur du véhicule n'a alors plus une visibilité suffisante pour pouvoir appréhender la situation.

On comprend ainsi que le réglage initial des projecteurs de croisement, réalisé pour un véhicule en position standard, n'est pas correct dès lors que l'assiette du véhicule n'est plus plate, c'est-à-dire lorsque le véhicule lève le nez ou pique du nez.

Pour résoudre cet inconvénient, certains véhicules sont équipés d'un système de correction automatique fixé sur le châssis du véhicule. Ce système de correction automatique comporte des capteurs placés sur les essieux avant et arrière du véhicule et qui mesurent chacun la différence de hauteur entre la position de la roue et le châssis, en fonction de la charge du véhicule. Un petit calculateur, intégré dans le système de correction automatique, permet de déterminer l'assiette du véhicule et de donner des informations à de petits moteurs qui orientent le projecteur. Cependant, ce système présente des inconvénients. En effet, les capteurs sont placés prés des roues, c'est-à-dire à des endroits difficilement accessibles par l'homme ou le robot lors de la fabrication du véhicule. Ainsi, l'opération de mise en place des capteurs, lors de la fabrication du véhicule, nécessite une grande précision et, par conséquent, un investissement en temps et en argent important. De plus, ces capteurs sont situés à des endroits soumis aux projections d'eau, de gravillons et autres éléments pouvant se trouver sur la route. La connectique de ces capteurs, et les capteurs eux-mêmes, doivent donc être robustes pour supporter ces projections.

On connaît par ailleurs des documents EP-A-1 201 498, FR-A-2 730 201 et US-A-6 144 159 des dispositifs de correction automatique de l'orientation en site des projecteurs d'un véhicule automobile lors des variations d'assiette de ce dernier, en émettant des points lumineux sur la route et en mesurant la distance séparant les images de ces points sur un capteur.

US-A-6 144 159 décrit en outre les préambules des revendications 1 et 6.

On connaît enfin du document US 5 359 666 un dispositif de reconnaissance en temps réel du contour de la route sur laquelle roule un véhicule à l'aide d'une caméra de télévision. Un traitement d'images consistant à déterminer les fuyantes dans la moitié basse et dans la moitié haute de l'image, puis à calculer leurs intersections, permet de reconnaître le profil de la route : droit, courbe, montée ou descente.

### Exposé de l'invention

L'invention a justement pour but de remédier aux inconvénients du système décrit précédemment. A cette fin, l'invention propose un système intelligent pour commander l'orientation en site des projecteurs d'un véhicule à partir d'une caméra et d'un point spécifique du faisceau lumineux, en fonction de l'assiette du véhicule. Ce système consiste à fixer une caméra sur le véhicule, ou à utiliser une caméra déjà en place dans le véhicule, pour filmer la route qui s'étend devant le véhicule. Une unité de traitement d'images assure ensuite le traitement d'au moins une ou deux images afin de déterminer la ligne d'horizon de la scène située devant le véhicule. A partir de cette ligne d'horizon, il est possible de déterminer un point spécifique de la scène puis de régler le projecteur jusqu'à ce qu'un point lumineux spécifique émis par une source d'émission lumineuse montée sur le réflecteur du projecteur soit confondu avec le point spécifique.

De façon plus précise, l'invention concerne un système de commande de l'orientation en site d'un projecteur de véhicule tel que défini dans la revendication 1.

L'invention concerne également un procédé de commande de l'orientation en site d'un projecteur de véhicule tel que défini dans la revendication 6.

### Brève description des dessins

La figure 1 représente un projecteur de véhicule muni du système de commande selon l'invention.
La figure 2A représente un exemple d'image d'une scène de route située devant un véhicule.
La figure 2B représente l'image de la figure 2A après avoir été traitée.
La figure 2C représente l'image de la figure 2B sur laquelle on a représenté l'horizon ainsi que la distance D et le point spécifique.
La figure 2D représente l'image de la figure 2C schématisée de façon à en montrer les éléments importants de la mise en oeuvre du procédé.
Les figures 3, 4 et 5 montrent des cas particuliers dans lesquels le procédé de l'invention peut aussi être mis en oeuvre.

### Description détaillée de modes de réalisation de l'invention

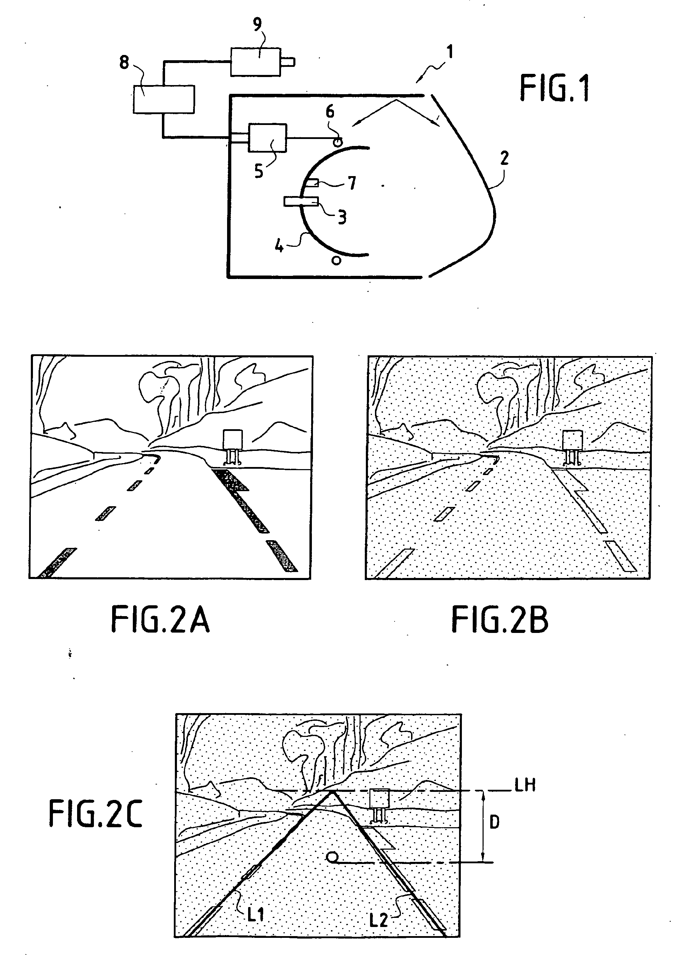

La figure 1 représente un projecteur de croisement d'un véhicule, muni d'un système de commande d'orientation conforme à l'invention. Plus précisément, cette figure 1 montre un projecteur 1 muni d'une optique 2 (une glace de fermeture du projecteur, et éventuellement aussi des pièces à rôle optique comme des lentilles non représentées) et d'une source de lumière 3 montée sur un support mobile 4. Ce support mobile 4 est le réflecteur du projecteur. Ce réflecteur 4 est actionné par un moteur 5 associé à un dispositif de rotation 6, tel qu'une rotule. A l'intérieur du projecteur 1, on a représenté, par des flèches, les mouvements de rotation du réflecteur 4 et, notamment, de la source de lumière 3 solidaire du réflecteur 4. Cette source de lumière 3 peut être une source de lumière classique pour un projecteur de véhicule. De même, le réflecteur 4, l'optique 2, le moteur 5 et le dispositif de rotation 6 peuvent être des éléments classiques dans un projecteur de croisement de véhicule.

Sur ce réflecteur 4, est également montée une seconde source de lumière 7 qui, comme cela sera expliqué par la suite, est une source de lumière qui émet un point lumineux spécifique. Comme la source de lumière 3, cette source de lumière 7, appelée dispositif d'émission d'un point lumineux spécifique, est solidaire du réflecteur 4. Elle peut donc être déplacée angulairement en même temps que le réflecteur 4 et la source d'éclairage 3.

Ce déplacement angulaire est réalisé par le moteur 5 en fonction d'informations reçues d'une unité de traitement d'images 8. Cette dernière est reliée à une caméra 9 qui réalise des prises de vues instantanées et successives de la scène de route se déroulant devant le véhicule. Cette caméra peut être une caméra installée dans le véhicule, ou en extérieur du véhicule, dans le cadre uniquement de l'invention. Selon l'invention, on peut aussi utiliser une caméra déjà installée dans le véhicule pour réaliser d'autres fonctions, comme le suivi de routes. Cette caméra est, de préférence, adaptée à la prise de vue de nuit. Ce peut être, par exemple, une caméra infrarouge.

Certaines, au moins, des images prises par la caméra sont transmises à l'unité de traitement d'images 8. Comme cela sera expliqué en détail par la suite, cette unité de traitement d'images 8 effectue un traitement sur au moins deux de ces images dans le but de déterminer la ligne d'horizon de la scène de route. A partir de cette ligne d'horizon, l'unité de traitement 8 détermine un point spécifique à éclairer et en déduit les déplacements angulaires à faire subir au réflecteur 4. Ces informations de déplacements angulaires sont ensuite transmises au moteur 5 qui les prend en compte pour modifier la position du réflecteur 4.

Dans le mode de réalisation de la figure 1, l'unité de traitement 8 comporte un microcalculateur. C'est ce microcalculateur qui détermine l'emplacement du point spécifique et les déplacements à faire subir au réflecteur. Dans un autre mode de réalisation de l'invention, c'est le calculateur propre au véhicule qui est utilisé pour déterminer le point spécifique, etc. L'unité de traitement d'images est alors connectée à ce calculateur, qui est lui-même connecté au moteur 5.

Sur la figure 1, on a représenté un dispositif d'émission 7 du point lumineux spécifique différent de la source de lumière 3. Cependant, ces deux sources d'éclairage peuvent d'être réunies, le point lumineux spécifique étant alors un élément particulier de la source de lumière 3. Dans ce cas, le point lumineux spécifique participe à la fonction d'éclairage du projecteur.

Par exemple, dans le cas d'un projecteur à diodes électroluminescentes, une des diodes peut être utilisée comme point spécifique lumineux. Dans ce cas, le faisceau lumineux émis par cette diode peut être modulé et ainsi servir de repère.

Dans un autre exemple, on peut choisir de moduler le faisceau émis par la source lumineuse 3, par exemple, de façon à ce qu'il forme un clignotement qui ainsi est repérable par la caméra.

Dans toute la description qui va suivre, on parlera d'un point spécifique lumineux. Il est bien entendu que ce point peut être remplacé par tout autre type de dessin comme, par exemple, des lignes parallèles lumineuses qui, sur l'image traitée, convergent vers un point.

Le traitement des images prises par la caméra 9 va maintenant être décrit, en détail, à partir d'exemples d'images. En particulier, les figures 2A à 2D montrent, à travers un exemple de scène de route, les différentes étapes du procédé de l'invention.

La figure 2A représente un exemple d'une image prise par la caméra 9. L'image montrée sur cette figure 2A est une image naturelle, prise par la caméra 9, c'est-à-dire une image non traitée.

La figure 2B montre la même image que la figure 2A mais après traitement par l'unité de traitement d'images 8. Dans un mode de réalisation de l'invention, ce traitement comporte les opérations suivantes :
Au moins deux des images naturelles de la scène de route prises par la caméra sont transmises à l'unité de traitement d'images. Ces images peuvent être deux images successives.
L'unité de traitement effectue, sur ces images naturelles, une comparaison. Selon un mode de réalisation du procédé de l'invention, cette comparaison est une soustraction d'une des images par rapport à l'autre. Cette soustraction permet de retirer les zones constantes, c'est-à-dire les zones qui sont identiques sur la première et sur la seconde images. Autrement dit, l'image obtenue par soustraction des deux images naturelles permet de faire apparaître les zones qui ont bougé, c'est-à-dire les zones et tous les éléments liés à la vitesse du véhicule.

L'unité de traitement d'images effectue ensuite un seuillage de l'image obtenue par soustraction. Ce seuillage consiste à supprimer tous les gris de l'image et à les remplacer par du blanc ou du noir, en fonction des niveaux de gris initiaux. On obtient alors l'image traitée de la figure 2B.

Dans un autre mode de réalisation de l'invention, une seule image est traitée au moyen d'une transformée mathématique appliquée à chaque pixel de l'image ou à des ensembles de pixels de l'image. Cette transformée mathématique peut être, par exemple, la transformée de Hoegh.

Le procédé de l'invention propose ensuite d'étudier cette image et d'en rechercher les lignes fuyantes ainsi que les points de convergence de ces lignes fuyantes. Ces lignes fuyantes se rejoignent à l'horizon. On détermine ainsi quel est l'horizon de la scène de route. Sur la figure 2C, on a référencé L1 et L2 les deux lignes fuyantes de l'image. Ces deux lignes fuyantes se rejoignent à l'horizon, en un point H. On déduit, à partir de ce point H, l'emplacement de la ligne d'horizon LH, qui est horizontale et passe par ce point H.

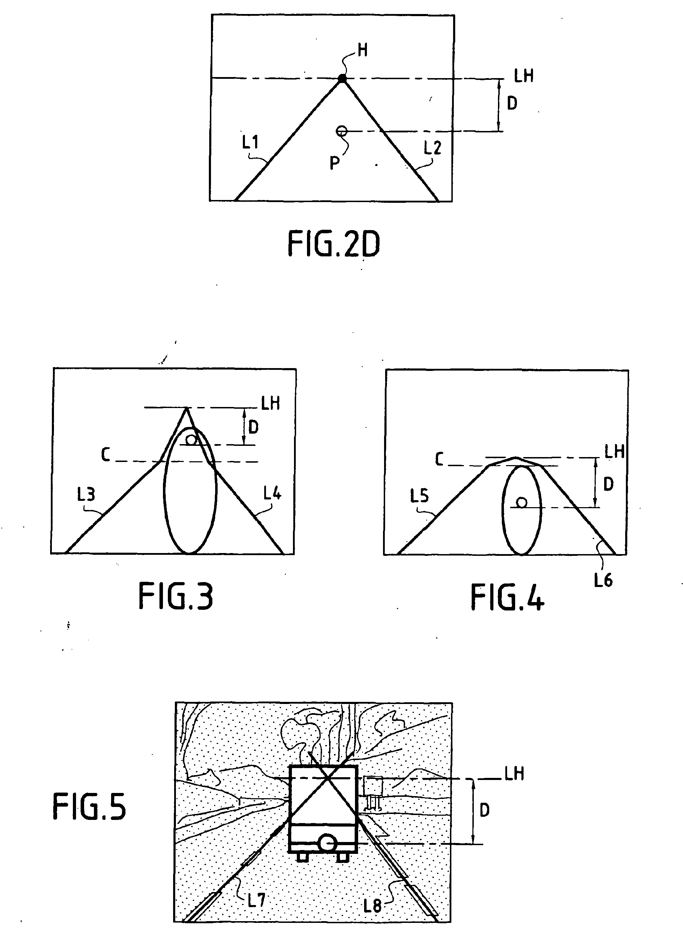

La figure 2D représente, de façon schématique, les lignes fuyantes L1 et L2 ainsi que leur point d'intersection H. Cette figure 2D n'est pas une image réellement obtenue pendant le traitement d'images. C'est une figure uniquement destinée à mieux faire comprendre l'invention. Cette figure 2D montre les éléments importants relevés sur l'image de la figure 2C et permettant d'appliquer la suite du procédé de l'invention.

Lorsque la ligne d'horizon LH a été déterminée, on détermine une distance D à laquelle doit se trouver un point spécifique. Ce point spécifique constitue un point de référence qui doit en permanence se trouver dans le faisceau lumineux du projecteur. En effet, à l'emplacement de ce point spécifique, l'angle entre la route et le faisceau lumineux est sensiblement identique, quelle que soit l'assiette du véhicule.

Plus précisément, on considère que l'emplacement du point spécifique doit se trouver à une distance D constante du point d'horizon H. Pour cela, on considère, comme point de départ, la ligne d'horizon LH. En se plaçant à une distance D en dessous de cette ligne d'horizon LH, et plus précisément en dessous du point H, on détermine l'emplacement du point spécifique P.

En pratique, cette distance D correspond à un nombre prédéfini et constant de lignes de trames de la caméra.

La position du réflecteur 4 est alors réglée pour que l'impact du point lumineux émis par le dispositif 7 d'émission du point lumineux spécifique se situe à cet emplacement P. Comme la source de lumière 3 du projecteur est solidaire du réflecteur 4, son faisceau lumineux se trouve automatiquement dirigé vers le point spécifique P.

Sur les figures 2C et 2D, on a schématisé le point spécifique P par un petit rond. Dans la pratique, ce point spécifique est constitué par l'impact du point lumineux émis par le dispositif d'émission 7. Ce point lumineux spécifique peut être, par exemple, un faisceau laser ou encore un faisceau émis par une diode infrarouge ou bien par une diode V.CSEL. Le point lumineux spécifique peut également être émis par tout autre dispositif d'éclairage fournissant d'un point d'impact lumineux visible dans le noir.

En pratique, la vérification du positionnement du point lumineux à l'emplacement déterminé par l'unité de traitement d'images se fait au moyen de la caméra, c'est-à-dire en visualisant, sur les images prises instantanément par la caméra, le point d'impact lumineux.

Le procédé de l'invention, tel qu'il vient d'être décrit, permet de garder constante la distance par rapport à l'infini, et ramenée dans le plan, quelle que soit l'assiette du véhicule. De cette façon, le projecteur du véhicule fournit, en permanence, le même angle d'éclairage du faisceau lumineux par rapport à la route.

Ce procédé peut être mis en oeuvre dans un cas classique de route relativement plate, comme montré sur les figures 2A à 2D. Il peut tout aussi bien être mis en oeuvre dans des cas plus particuliers, comme le fond d'une vallée ou le haut d'un sommet. Dans ces cas, le procédé est mis en oeuvre de la même façon qu'expliqué précédemment pour une route plate.

Sur la figure 3, on a représenté le cas particulier d'une route en fond de vallée. Ce cas est représenté d'une façon schématisée, comme l'était l'exemple précédent, avec la figure 2D. Le cas particulier schématisé par cette figure 3 est le cas où le véhicule se trouve dans le fond d'une vallée et où il s'apprête à monter sur une colline ou une montagne. Dans cet exemple, la partie, qui est située en dessous de la ligne C en pointillés, montre la route qui se trouve dans le fond de la vallée et qui forme les lignes fuyantes L3 et L4. Au niveau de la ligne pointillée C, les lignes fuyantes L3 et L4 sont coupées, c'est-à-dire qu'elles forment un angle non plat avec les lignes fuyantes initiales. Cette coupure des lignes fuyantes représente l'endroit où la route commence à monter, c'est-à-dire où la route présente une pente par rapport à la partie de route qui était plate dans le fond de la vallée. Malgré cette coupure des lignes fuyantes, on voit d'après la figure 3, que la ligne d'horizon LH se détermine de la même façon que dans le cas des figures 2. Lorsque cette ligne d'horizon LH est déterminée, on peut déterminer l'emplacement du point spécifique P, à une distance D en dessous de cette ligne LH.

Sur la figure 4, on a représenté, de façon schématique, le cas particulier d'un véhicule au sommet d'une côte. Dans ce cas, le véhicule se trouve en haut d'une côte et est prêt à aborder une route plate ou une route en pente descendante. Comme on le voit sur la figure 4, les lignes fuyantes L5 et L6 de la route en côte, c'est-à-dire la partie des lignes fuyantes situées en dessous de la ligne pointillée C, se coupent au niveau de cette ligne C. Comme précédemment, les lignes fuyantes L5 et L6 se rejoignent au point d'horizon, situé après la ligne C. L'emplacement du point spécifique est alors déterminé à une distance D sous la ligne d'horizon LH.

On comprend ainsi que, quelle que soit la géométrie de la route sur laquelle circule le véhicule, la ligne d'horizon est toujours déterminable à partir des lignes fuyantes, qu'elle soit rectiligne ou en pente. Et dès lors que la ligne d'horizon est déterminée, l'emplacement du point spécifique peut être déterminé à son tour.

Sur chacune de ces figures 3 et 4, on a représenté par un ovale la portée du projecteur du véhicule. On comprend ainsi que, selon la géométrie de la route, la portée des projecteurs peut être différente mais que l'angle d'éclairage du faisceau lumineux, par rapport à la route, reste identique. L'invention permet ainsi d'anticiper les variations du profil de la route.

Sur la figure 5, on a représenté une situation particulière dans laquelle peut se trouver un véhicule. Cette situation est celle où un autre véhicule, et en particulier un véhicule de taille relativement imposante comme un poids lourd, circule sur la route devant le véhicule considéré. La figure 5 montre l'image obtenue après traitement, dans une telle situation. Dans un tel cas, le camion a gêné la prise d'images de la scène de route. Aussi, l'image obtenue après traitement ne comporte qu'une partie des lignes fuyantes L7 et L8. Cependant, avec cette partie des lignes fuyantes détectées, situées entre le camion et le véhicule, il est possible d'extrapoler la suite de ces lignes fuyantes puis, à partir de ces lignes fuyantes extrapolées, de déterminer la ligne d'horizon LH. En variante, la ligne d'horizon LH peut être déterminée en fonction des lignes fuyantes L7 et L8 extrapolées et aussi en tenant compte des dimensions du point lumineux spécifique.

On peut ainsi effectuer une correction réaliste de l'image. Les données obtenues par extrapolation ont, bien entendu une précision moindre que celles obtenues dans les cas décrits précédemment. Toutefois, en fonction de la dimension de l'impact du point lumineux spécifique, il est possible de déterminer l'erreur liée à la présence du camion.

Le système de l'invention qui vient d'être décrit peut être adapté sur tous les types de véhicules, qu'ils soient ou non munis d'une caméra. Ils peuvent en particulier être adaptés sur des véhicules déjà munis d'une caméra, et notamment d'une caméra infrarouge utilisée pour la vision de nuit.

De même le système de l'invention peut être mis en oeuvre dans un véhicule équipé d'un ordinateur de bord. L'unité de traitement d'images peut alors être intégrée dans l'ordinateur de bord du véhicule. Dans ce cas, il suffit d'intégrer, dans l'ordinateur de bord, un logiciel adéquat permettant d'effectuer le traitement d'images à partir des images issues de la caméra et de commander le moteur qui actionne le réflecteur du projecteur. Le coût de ce système de commande est alors quasi imperceptible pour le constructeur. Dans le cas contraire, une unité de traitement d'images, incluant ou non un microcalculateur, peut être ajoutée dans le véhicule.

Le système de l'invention peut aussi être associé à un GPS et à un système de cartographie pour connaître les variations verticales du sol et ainsi anticiper les commandes des projecteurs.

## Revendications

1. Système de commande de l'orientation en site d'un projecteur (1) de véhicule muni d'une source lumineuse (3) fixée sur un réflecteur mobile (4),
d'une caméra (9) montée dans le véhicule, effectuant des prises d'images successives d'une scène se déroulant devant le véhicule, et d'
un dispositif d'émission d'un point lumineux spécifique (7), **caractérisé en ce qu'**il comporte : une unité de traitement d'images (8) connectée à la caméra pour déterminer un point spécifique de la scène (P) le système commandant l'orientation du projecteur jusqu'à ce que le point lumineux spécifique (7) émis par le projecteur (1) soit confondu avec le point spécifique (P) de la scène.

2. Système de commande selon la revendication 1, **caractérisé en ce que** le dispositif d'émission d'un point lumineux spécifique est monté sur le réflecteur.

3. Système de commande selon la revendication 1 ou 2, **caractérisé en ce que** le dispositif d'émission d'un point lumineux spécifique est une source de rayon laser.

4. Système de commande selon la revendication 1 ou 2, **caractérisé en ce que** le dispositif d'émission d'un point lumineux spécifique est une diode infrarouge ou une diode V.CSEL.

5. Système de commande selon l'une quelconque des revendications 1 à 4, **caractérisé en ce que** la caméra est une caméra infrarouge.

6. Procédé de commande de l'orientation en site d'un projecteur de véhicule, comportant les opérations de :
- prises d'images d'une scène de route se déroulant devant le véhicule,
- traitement d'au moins une image de la scène de route et obtention d'une image traitée, **caractérisé en ce qu'**il comporte les opérations suivantes :
- détermination, à partir de cette image traitée, d'une ligne d'horizon (LH) de la scène de route,
- détermination d'un point spécifique (P) de la scène de route, situé à une distance (D) prédéfinie de la ligne d'horizon,
- réglage de l'orientation du projecteur jusqu'à ce qu'un point lumineux spécifique émis par le projecteur soit confondu avec ce point spécifique (P) de la scène.

7. Procédé de commande selon la revendication 6, **caractérisé en ce que** le point lumineux émis par le projecteur est différent d'un faisceau lumineux éclairant la scène de route.

8. Procédé de commande selon la revendication 6 ou 7, **caractérisé en ce que** l'opération de traitement d'image consiste à traiter au moins deux images pour en déduire une image traitée.

9. Procédé de commande selon la revendication 8, **caractérisé en ce que** l'opération de traitement de deux images consiste à soustraire une image de l'autre.

10. Procédé de commande selon la revendication 9, **caractérisé en ce que** l'opération de traitement de deux images consiste à réaliser un seuillage sur l'image obtenue après soustraction.

11. Procédé de commande selon l'une quelconque des revendications 6 à 10, **caractérisé en ce que** l'opération de détermination d'une ligne d'horizon consiste à déterminer des lignes fuyantes, dans l'image traitée, et à en déduire la ligne d'horizon.

12. Procédé de commande selon l'une quelconque des revendications 6 à 11, **caractérisé en ce que** la distance (D) est constante.

13. Procédé de commande selon l'une quelconque des revendications 6 à 12, **caractérisé en ce que** la distance (D) correspond à un nombre de lignes de trames de la caméra.

14. Procédé de commande selon l'une quelconque des revendications 6 à 13, **caractérisé en ce que** la ligne d'horizon est extrapolée en fonction des lignes fuyantes et des dimensions du point lumineux.

15. Projecteur de véhicule comportant un réflecteur mobile actionné par un moteur et une source lumineuse fixée sur le réflecteur, **caractérisé en ce qu'**une orientation en site du projecteur est commandée par le système de commande selon l'une quelconque des revendications 1 à 5.

## Claims

1. System for controlling the orientation in terms of elevation of a vehicle headlight (1) provided with a light source (3) fixed to a movable reflector (4), a camera (9) mounted in the vehicle, taking successive images of a scene unfolding in front of the vehicle, and a device emitting a specific light spot (7), **characterised in that** it comprises an image processing unit (8) connected to the camera in order to determine a specific point on the scene (P), the system controlling the orientation of the headlight until the specific light spot (7) emitted by the headlight (1) is merged with the specific point (P) of the scene.

2. Control system according to claim 1, **characterised in that** the device for emitting a specific light spot is mounted on the reflector.

3. Control system according to claim 1 or 2, **characterised in that** the device for emitting a specific light spot is a laser beam source.

4. Control system according to claim 1 or 2, **characterised in that** the device for emitting a specific light spot is an infrared diode or a V.CSEL diode.

5. Control system according to any one of claims 1 to 4, **characterised in that** the camera is an infrared camera.

6. Method of controlling the orientation in terms of elevation of a vehicle headlight, comprising the operations of:
- taking images of a road scene unfolding in front of the vehicle,
- processing at least one image from the road scene and obtaining a processed image,
**characterised in that** it comprises the following operations:
- determining, from this processed image, a horizon line (LH) of the road scene,
- determining a specific point (P) on the road scene, situated at a predefined distance (D) from the horizon line,
- adjusting the orientation of the headlight until a specific light point emitted by the headlight is merged with this specific point (P) of the scene.

7. Control method according to claim 6, **characterised in that** the light spot emitted by the headlight is different from a light beam illuminating the road scene.

8. Control method according to claim 6 or 7, **characterised in that** the image processing operation consists of processing at least two images in order to derive therefrom a processed image.

9. Control method according to claim 8, **characterised in that** the operation of processing two images consists of subtracting one image from the other.

10. Control method according to claim 9, **characterised in that** the operation of processing two images consists of performing a thresholding on the image obtained after subtraction.

11. Control method according to any one of claims 6 to 10, **characterised in that** the operation of determining a horizon line consists of determining converging lines, in the processed image, and deriving therefrom the horizon line.

12. Control method according to any one of claims 6 to 11, **characterised in that** the distance (D) is constant.

13. Control method according to any one of claims 6 to 12, **characterised in that** the distance (D) corresponds to a number of raster lines of the camera.

14. Control method according to any one of claims 6 to 13, **characterised in that** the horizon line is extrapolated according to the converging lines and the dimensions of the light spot.

15. Vehicle headlight comprising a movable reflector actuated by a motor and a light source fixed on the reflector, **characterised in that** an orientation of the headlight in terms of elevation is controlled by the control system according to any one of claims 1 to 5.

## Patentansprüche

1. Vorrichtung zum Einstellen der Höhenausrichtung eines Kraftfahrzeugscheinwerfers (1), der eine an einem beweglichen Reflektor (4) befestigte Lichtquelle (3), eine im Fahrzeug angebrachte Kamera (9), die nacheinander Aufnahmen von einem vor dem Fahrzeug liegenden Ausschnitt macht, und eine Einrichtung zum Aussenden eines spezifischen Lichtpunkts (7) aufweist,
**dadurch gekennzeichnet, dass** sie eine Bildverarbeitungseinheit (8) umfasst, die mit der Kamera zum Bestimmen eines spezifischen Punkts (P) des Ausschnitts verbunden ist, wobei die Ausrichtung des Scheinwerfers durch die Vorrichtung eingestellt wird, bis der von dem Scheinwerfer (1) ausgesandte, spezifische Lichtpunkt (7) mit dem spezifischen Punkt (P) des Ausschnitts zusammenfällt.

2. Stellvorrichtung nach Anspruch 1,
**dadurch gekennzeichnet, dass** die Einrichtung zum Aussenden eines spezifischen Lichtpunkts auf dem Reflektor angebracht ist.

3. Stellvorrichtung nach Anspruch 1 oder 2,
**dadurch gekennzeichnet, dass** die Einrichtung zum Aussenden eines spezifischen Lichtpunkts eine Laserstrahlquelle ist.

4. Stellvorrichtung nach Anspruch 1 oder 2,
**dadurch gekennzeichnet, dass** die Einrichtung zum Aussenden des spezifischen Lichtpunkts eine Infrarotdiode oder eine VCSEL-Diode ist.

5. Stellvorrichtung nach einem der Ansprüche 1 bis 4,
**dadurch gekennzeichnet, dass** die Kamera eine Infrarot-Kamera ist.

6. Verfahren zum Einstellen der Höhenausrichtung eines Kraftfahrzeugscheinwerfers, aufweisend die Schritte des
- Aufnehmens eines vor dem Fahrzeug liegenden Fahrbahnausschnitts,
- Verarbeitens wenigstens eines Bildes des Fahrbahnausschnitts und Erhalt eines verarbeiteten Bildes,
**dadurch gekennzeichnet, dass** es die folgenden Schritte umfasst:
- Bestimmen einer Horizontlinie (LH) des Fahrbahnausschnitts anhand des verarbeiteten Bildes,
- Bestimmen eines spezifischen Punkts (P) des Fahrbahnausschnitts, der in einem vorgegebenen Abstand (D) zur Horizontlinie angeordnet ist,
- Einstellen der Ausrichtung des Scheinwerfers, bis ein von dem Scheinwerfer ausgesandter spezifischer Lichtpunkt mit diesem spezifischen Punkt (P) des Ausschnitts zusammenfällt.

7. Einstellverfahren nach Anspruch 6,
**dadurch gekennzeichnet, dass** der von dem Scheinwerfer ausgesandte Lichtpunkt sich von einem den Fahrbahnausschnitt beleuchtenden Lichtbündel unterscheidet.

8. Einstellverfahren nach Anspruch 6 oder 7,
**dadurch gekennzeichnet, dass** der Bildverarbeitungsschritt in der Verarbeitung von wenigstens zwei Bildern besteht, um daraus ein verarbeitetes Bild abzuleiten.

9. Einstellverfahren nach Anspruch 8,
**dadurch gekennzeichnet, dass** die Verarbeitung von zwei Bildern darin besteht, ein Bild vom anderen zu subtrahieren.

10. Einstellverfahren nach Anspruch 9,
**dadurch gekennzeichnet, dass** die Verarbeitung von zwei Bildern darin besteht, einen Schwellenwertvergleich an dem nach Subtraktion erhaltenen Bild auszuführen.

11. Einstellverfahren nach einem der Ansprüche 6 bis 10,
**dadurch gekennzeichnet, dass** die Bestimmung einer Horizontlinie darin besteht, Fluchtlinien in dem verarbeiteten Bild zu bestimmen und daraus die Horizontlinie abzuleiten.

12. Einstellverfahren nach einem der Ansprüche 6 bis 11,
**dadurch gekennzeichnet, dass** der Abstand (D) konstant ist.

13. Einstellverfahren nach einem der Ansprüche 6 bis 12,
**dadurch gekennzeichnet, dass** der Abstand (D) einer Anzahl von Rasterlinien der Kamera entspricht.

14. Einstellverfahren nach einem der Ansprüche 6 bis 13,
**dadurch gekennzeichnet, dass** die Horizontlinie in Abhängigkeit von den Fluchtlinien und der Größe des Lichtpunkts extrapoliert wird.

15. Kraftfahrzeugscheinwerfer mit einem durch einen Motor betätigten beweglichen Reflektor und einer auf dem Reflektor befestigten Lichtquelle,
**dadurch gekennzeichnet, dass** ein Einstellen der Höhenausrichtung des Scheinwerfers durch die Stellvorrichtung nach einem der Ansprüche 1 bis 5 erfolgt.
